# EUROPEAN PATENT SPECIFICATION

(11) **EP 2 181 584 B1**
(45) Date of publication and mention of the grant of the patent: **26.12.2012**
(21) Application number: 09174485.4
(22) Date of filing: 29.10.2009
(51) Int. Cl.: A01K 1/01, A01K 1/015

(54) **Dung discharge device for use in a floor of a lifestock house**
Vorrichtung zur Entmistung eines Stallbodens
Dispositif de décharge de lisier du sol d'un étable

(30) Priority: 31.10.2008 NL 2002156
(43) Date of publication of application: 05.05.2010
(73) Proprietor: Swaans, Johannes, 5591 PW Heeze (NL)
(72) Inventor: Swaans, Johannes, 5591 PW Heeze (NL)
(74) Representative: Verhees, Godefridus Josephus Maria

(56) References cited:
- EP-A2- 1 159 871
- WO-A1-2006/103534
- NL-C1- 1 014 975

## Description

### Field of the invention.

The present invention relates to a manure discharge device for use in a stall floor for discharging manure present on the stall floor to a manure cellar located underneath a stall floor.

### State of the art.

EP1866499 discloses a manure discharge device for use in a stall floor for discharging manure present on the stall floor to a manure cellar located underneath a stall floor, comprising a floor element provided with discharge openings and a walking surface, as well as a manure discharge flap coupled to the floor element.

A manure discharge device is to be arranged such that the least possible emission escapes from the manure cellar whereas, alternatively, the manure is discharged in a proper manner and the chance of the device becoming blocked is minimised. A known manure discharge device is arranged as discharge slots with rubber flaps which slots are located underneath manure openings in the stall floor. This provides that substantially no emission can escape from the manure cellar. A disadvantage of this known manure discharge device is that the flaps can become fouled and thus no longer are capable of closing off the discharge openings in a proper way. Since the flaps are installed underneath the stall floor, it is impossible or hardly possible for them to be cleaned, exchanged and/or maintained.

### Summary of the invention.

It is an object of the invention to provide a manure discharge device of the type defined in the opening paragraph where little or no emission may escape and the chance of a breakdown is minimised. To this end the manure discharge device according to the invention is characterised in that it comprises a floor element provided with discharge openings and a walking surface, as well as a manure discharge rotor comprising a rotating shaft, and a plurality of guards fixed to the rotating shaft, which manure discharge rotor is located underneath the floor element in the place of the discharge openings on the side turned away from the walking surface and parallel with the floor element and is rotatably coupled to the floor element. If manure ends up between two guards in the manure discharge rotor through the discharge openings, this rotor will turn so that the manure ends up in the manure cellar. By providing that the least possible emission can circumvent the rotor, for example by installing panels close to the manure discharge rotor, the emission will be minimised too. The manure discharge device may be both a separate unit which is placed in an opening in the stall floor and may be integrated with the stall floor.

For further reducing the chance of emission from the manure cellar via the manure discharge device, an embodiment of the manure discharge device is characterised in that the manure discharge device further has two side panels which are located parallel to and on either side of the manure discharge rotor and have inner walls facing the manure discharge rotor which inner walls are at least partly arcuate and along which the guards are turning. If the angle through which the arcuate parts of the inner walls are turning is large enough, the guards will continuously keep the passage blocked, so that there can be no escape of emission.

For reducing the chances of a breakdown as a result of the blocking of the turning motion of the manure discharge rotor, a further embodiment of the manure discharge device according to the invention is characterised in that the manure discharge device comprises driving means which are connected to the rotating shaft. The result of this is forced rotation of the manure discharge rotor so that the chances of breakdown are reduced considerably and continuous manure discharge is effected.

Preferably the driving means comprise a driving gear which is connected to the rotating shaft, which driving gear protrudes through a slot in the floor element to above the walking surface and which driving gear cooperates during operation with a push/pull element connected to a manure slide. A push/pull element in this context is understood to mean any elongated member with which a manure slide can be moved, such as a pulling cable, rope, chain etc.

### Brief description of the drawings.

The following description relating to the appended drawings, the whole given by way of non-limiting example of the manure discharge device according to the invention, will provide better understanding of how the invention can be realised, in which:
Fig. 1 shows in a cross-sectional view an embodiment of the manure discharge device according to the invention;
Fig. 2 shows in a longitudinal sectional view the manure discharge device shown in Fig. 1;
Fig. 3 shows in a plan view the manure separator shown in Fig. 1; and
Fig. 4 shows a stall floor provided with manure discharge devices shown in Fig. 1.

### Detailed description of the drawings

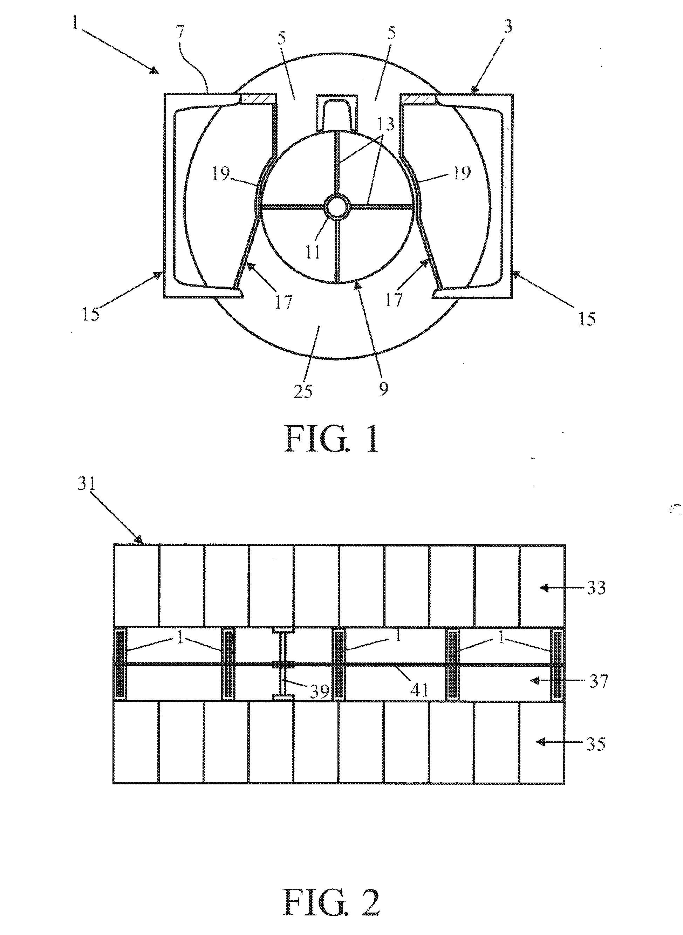

Figs. 1, 2 and 3 show an embodiment of the manure discharge device according to the invention in a cross-sectional view, longitudinal sectional view and plan view respectively. The manure discharge device 1 comprises a floor element 3 which is provided with elongated discharge openings 5 and has a walking surface 7 at the top. The manure discharge device further includes a manure discharge rotor 9. This manure discharge rotor 9 has a rotating shaft 11 as well as guards 13 connected thereto and which extend in longitudinal direction along the rotating shaft and are positioned radially to the rotating shaft in transverse direction. The manure discharge device 9 is located underneath the floor element 3 in the place of the discharge openings 5 on the side turned away from the walking surface 7.

The manure discharge device 1 further includes two side panels 15 which are located in parallel with and on either side of the manure discharge rotor 9. These side panels are formed by C-beams with inner walls 17 fixed thereto which are facing the manure discharge rotor 9. Parts 19 of the inner walls are arcuate. During operation these guards 13 turn at a slight distance past these arcuate parts 19 so that there is substantially no emission escape.

At the ends of the floor element 3 there are supports 21 with which the manure discharge device 1 can be placed on bearing supports 22 available in a stall. The rotating shaft 11 is rotatably suspended from the supports 21 by means of drop hangers 23.

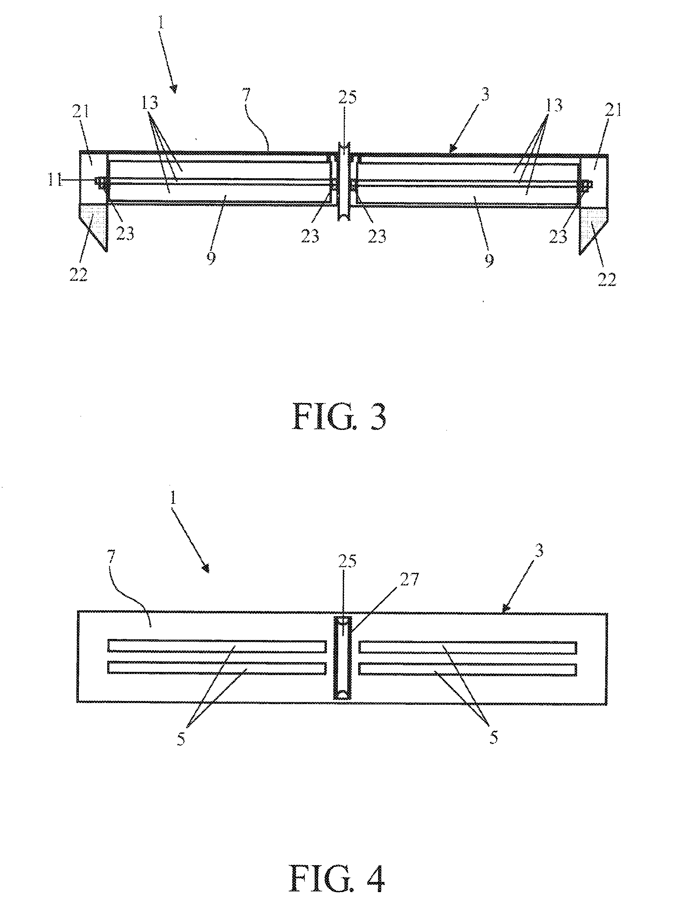

The manure discharge device 1 further includes a driving gear 25 which is connected in the middle to the rotating shaft 11. The driving gear 25 partly protrudes through a slot 27 in the floor element 3 to above the walking surface 7. When used in a stall floor the driving gear cooperates during operation with a push/pull element connected to a manure slide. This is shown in Fig. 4. This drawing Figure shows a stall 31 in a plan view. The stall has two rows of cubicles/lying spaces 33 and 35 for animals with a gangway 37 located therebetween. Every 6 metres there is a manure discharge device 1 in the gangway. Every so many periods a manure slide 39 is pulled across the gangway 37. To the manure slide is connected a push/pull element, in this embodiment arranged as a pulling cable 41, which cable is led over the driving gears 25 of the manure discharge devices. While the manure slide 39 is pulled along the pulling cable takes along the driving gears 25 which are then turned around during this operation.

Albeit the invention has been described in the foregoing based on the drawings, it should be observed that the invention is not by any manner or means restricted to the embodiment shown in the drawings. The invention also extends to all embodiments deviating from the embodiment shown in the drawings within the scope defined by the claims.

## Claims

1. A manure discharge device for use in a stall floor for discharging manure present on the stall floor to a manure cellar located underneath a stall floor, comprising a floor element (3) provided with discharge openings (5) and a walking surface (7), **characterised in that** it comprises a manure discharge rotor (9) comprising a rotating shaft (11), and a plurality of guards (13) fixed to the rotating shaft, which manure discharge rotor is located underneath the floor element in the place of the discharge openings on the side turned away from the walking surface and parallel with the floor element and is rotatably coupled to the floor element.

2. A manure discharge device as claimed in claim 1, **characterised in that** the manure discharge device further has two side panels (15) which are located parallel to and on either side of the manure discharge rotor and have inner walls (17) facing the manure discharge rotor which inner walls are at least partly arcuate and along which the guards are turning.

3. A manure discharge device as claimed in claim 1 or 2, **characterised in that** the manure discharge device comprises driving means (25) which are connected to the rotating shaft.

4. A manure discharge device as claimed in claim 3, **characterised in that** the driving means comprise a driving gear which is connected to the rotating shaft, which driving gear protrudes through a slot in the floor element to above the walking surface and which driving gear cooperates during operation with a push/pull element connected to a manure slide.

## Patentansprüche

1. Mist-Abführvorrichtung zum Einbau in einen Stallboden für das Abführen von auf dem Stallboden befindlichen Mist in einen Mistkeller unter dem Stallboden, die ein mit Abführöffnungen (5) und einer Lauffläche (7) ausgestattetes Bodenelement (3) umfasst, **dadurch gekennzeichnet, dass** die Mist-Abführvorrichtung einen Mistabführrotor (9) mit einer Drehwelle (11) enthält sowie eine Reihe von an der Drehwelle befestigten Blechen (13), welcher Mistabführrotor an der Stelle der Abführöffnungen an der von der Lauffläche abgekehrten Seite unter dem Bodenteil und parallel zum Bodenteil angeordnet und drehbar mit dem Bodenteil verbunden ist.

2. Mist-Abführvorrichtung gemäß Patentanspruch 1, **dadurch gekennzeichnet, dass** die Mist-Abführvorrichtung ferner zwei Seitenteile (15) umfasst, die parallel und beidseitig vom Mistabführrotor angeordnet und mit dem Mistabführrotor zugekehrten Innenwänden (17) ausgestattet sind, die mindestens teils kreisbogenförmig sind und an denen entlang sich die Bleche drehen.

3. Mist-Abführvorrichtung gemäß Patentanspruch 1 oder 2, **dadurch gekennzeichnet, dass** die Mist-Abführvorrichtung Antriebsmittel (25) umfasst, die mit der Drehwelle verbunden sind.

4. Mist-Abführvorrichtung gemäß Patentanspruch 3, **dadurch gekennzeichnet, dass** die Antriebsmittel ein Antriebsrad umfassen, das mit der Drehwelle verbunden ist, welches Antriebsrad aus einem Spalt im Bodenelement über die Lauffläche herausragt und welches Antriebsrad bei Betrieb mit einem mit einem Mistschieber verbundenen Zieh-/Drückelement zusammenarbeitet.

## Revendications

1. Dispositif d'évacuation du fumier pour l'utilisation dans un plancher d'étable, pour l'évacuation vers une cave à fumier se trouvant sous un plancher d'étable de fumier se trouvant sur le plancher d'étable, comprenant un élément de plancher (3) pourvu d'ouvertures d'évacuation (5) et d'une bande de roulement (7), **caractérisé en ce que** le dispositif d'évacuation du fumier comprend un rotor d'évacuation du fumier (9) qui comprend un axe de rotation (11) ainsi qu'un certain nombre de cloisons (13) fixées à l'axe de rotation, lequel rotor d'évacuation du fumier se trouve au niveau des ouvertures d'évacuation sur le côté opposé à la bande de roulement, sous la partie de plancher et parallèle à la partie de plancher, et est couplé de façon pivotante à la partie de plancher.

2. Dispositif d'évacuation du fumier selon la revendication 1, **caractérisé en ce que** le dispositif d'évacuation du fumier comprend de plus deux parties latérales (15) qui sont parallèles au et se trouvent des deux côtés du rotor d'évacuation du fumier, et qui sont pourvues de parois internes (17) tournées vers le rotor d'évacuation du fumier et au moins partiellement en forme d'arc de cercle et le long desquelles tournent les cloisons.

3. Dispositif d'évacuation du fumier selon la revendication 1 ou 2, **caractérisé en ce que** le dispositif d'évacuation du fumier comprend des moyens de propulsion (25) qui sont reliés à l'axe de rotation.

4. Dispositif d'évacuation du fumier selon la revendication 3, **caractérisé en ce que** les moyens de propulsion comprennent une roue motrice qui est reliée à l'axe de rotation, laquelle roue motrice s'étend jusqu'au dessus de la bande de roulement à travers une fente dans l'élément de plancher, et laquelle roue motrice, pendant le fonctionnement, travaille de pair avec un élément de traction/poussée relié à un tiroir à fumier.
